# EUROPEAN PATENT APPLICATION

(11) **EP 4 606 861 A1**
(43) Date of publication of application: **27.08.2025**
(21) Application number: 23879413.5
(22) Date of filing: 19.07.2023
(51) Int. Cl.: C08L 77/00, C08L 23/00, C08L 79/04, F16L 11/06

(54) **RESIN COMPOSITION AND HOSE**

(30) Priority: 18.10.2022 JP 2022167160
(71) Applicant: BRIDGESTONE CORPORATION, Chuo-ku Tokyo 104-8340 (JP)
(72) Inventor: HATANAKA Kota, Tokyo 104-8340 (JP)
(74) Representative: Marks & Clerk LLP
(86) International application number: PCT/JP2023/026468
(87) International publication number: WO 2024/084760

(57) **Abstract**

A resin composition with good adhesion to rubber members, good oil resistance, and excellent durability is provided. To solve the aforementioned issue, the present disclosure includes a polyamide, an olefin-based elastomer, and a compound having a piperidine structure, wherein the compound having a piperidine structure has the piperidine structure having a repeating unit containing the piperidine structure and a molecular weight of 1000 to 5000, and the content of the compound having the piperidine structure is 0.1 to 6 parts by mass per 100 parts by mass of the total content of the polyamide and the olefin-based elastomer.

## Description

### TECHNICAL FIELD

The present disclosure relates to a resin composition and a hose.

### BACKGROUND

Refrigerant transport hoses are components used in vehicle air conditioning systems and other applications. Since fluorinated refrigerants and lubricating oils flow inside refrigerant transport hoses, they are required to have high gas barrier properties from a performance and environmental perspective. Therefore, materials forming the innermost layer are typically polyamide resin layers, which provide excellent gas barrier properties and superior vibration durability, including impulse resistance. Over this layer, an inner tube rubber layer is provided, on which a reinforcing yarn layer made of organic fibers such as PET is provided. Finally, a rubber layer composed of a weather-resistant rubber such as EPDM is provided (as disclosed in PTL 1 or other literature).

However, the above-described polyamide resin is prone to degradation due to refrigerants such as Freon and oils from compressors. This degradation issue is not resolved even when olefin-based elastomers are used as the material for the innermost layer, highlighting the need for further improvements in durability.

For example, if even trace amounts of acidic components are present in the air conditioning system, polyamide resin compositions may undergo significant degradation under high-temperature and high-pressure operating conditions, which may render them unsuitable for use. Such acidic components may include extreme pressure additives found in compressor oils sealed together with the refrigerant. As a result, depending on the type of oil used in air conditioning systems and environmental conditions, conventional refrigerant transport hoses may fail to achieve practical durability and become unusable.

To prevent such degradation and enhance the durability of the innermost layer, techniques involving the addition of inorganic acid scavengers to polyamide resin compositions have been developed.

For example, PTL 1 discloses a technology in which a refrigerant transport hose with a gas barrier layer made of a polyamide resin composition contains one or more metal compounds selected from the group consisting of divalent or trivalent metal hydroxides, oxides, and carbonates.

### CITATION LIST

### Patent Literature

PTL 1: JP 2007-15245 A
PTL 2: JP 2010-249316 A

### SUMMARY

### (Technical Problem)

According to the technology in PTL 1, the degradation of the gas barrier layer caused by refrigerants and compressor oils is prevented, thereby improving the durability of refrigerant transport hoses.

However, in the technology of PTL 1, since an inorganic acid scavenger is included in the resin composition forming the innermost layer, there are issues such as a decrease in moldability due to the non-uniform dispersion of the inorganic acid scavenger in the resin composition and a decrease in adhesion to the inner tube rubber. Furthermore, there is a concern that the acid scavenger may generate water when capturing an acid, which may prevent the hydrolysis suppression effect from being fully exhibited, and further improvements in durability have been desired. Alternatively, a technology using an organic acid scavenger as the acid scavenger is also conceivable. In this case, however, there is a concern that the oil resistance of the innermost layer may be decreased.

Therefore, it would be helpful to provide a resin composition that has good adhesion to rubber members, good oil resistance, and excellent durability.

It would also be helpful to provide a hose which has good adhesion to the innermost layer and the inner tube rubber and good oil resistance, in which degradation caused by refrigerants or oils is suppressed, resulting in excellent durability.

### (Solution to Problem)

The present inventor has conducted extensive research to solve the aforementioned problem and, as a result, has found that by incorporating a compound having a certain piperidine structure in addition to a polyamide and an olefin-based elastomer into the resin composition and limiting the content to a certain range, it is possible to maintain good adhesion to rubber members while capturing an acid and suppressing hydrolysis. This enables the realization of excellent durability and also improves oil resistance

The gist of the present disclosure for solving the aforementioned problem is as follows.

The resin composition of the present disclosure comprises a polyamide, an olefin-based elastomer, and a compound having a piperidine structure,
the compound having a piperidine structure having a repeating unit containing the piperidine structure and a molecular weight of 1000 to 5000, and
a content of the compound having the piperidine structure being 0.1 to 6 parts by mass per 100 parts by mass of a total content of the polyamide and the olefin-based elastomer.

By having the above features, excellent adhesion to rubber members, good oil resistance, and excellent durability can be achieved.

Additionally, in the resin composition of the present disclosure, a content ratio of the polyamide and the olefin-based elastomer (the polyamide / the olefin-based elastomer) is preferably 80/20 to 50/50. This is because barrier properties, flexibility, and impact resistance are well balanced.

Furthermore, in the resin composition of the present disclosure, the olefin-based elastomer is preferably selected from the group consisting of ethylene-butene copolymers, EEA, EPR, and EPDM, and a derivative thereof. This is because flexibility and impact resistance can be further improved without causing a reduction in barrier properties and other performances.

Additionally, in the resin composition of the present disclosure, the compound having the piperidine structure preferably has four or more methyl groups in the piperidine structure. This is because even better durability and oil resistance can be achieved.

Furthermore, in the resin composition of the present disclosure, the compound having the piperidine structure preferably includes at least 2,2,6,6-tetramethylpiperidine in the piperidine structure. This is because even better durability and oil resistance can be achieved.

Moreover, in the resin composition of the present disclosure, the compound having the piperidine structure preferably further includes a triazine structure in the repeating unit. This is because even better durability and oil resistance can be achieved.

Additionally, in the resin composition of the present disclosure, it is preferable that the composition is used for an innermost layer of a hose, and it is more preferable that the hose is a refrigerant transport hose. This is because the effects of improving durability and oil resistance are significantly exhibited.

The hose of the present disclosure comprises the resin composition of the present disclosure described above.

By having the above features, excellent adhesion between the innermost layer and the inner tube rubber and good oil resistance can be achieved, degradation caused by refrigerants and oils can be suppressed, resulting in excellent durability is also achieved.

### (Advantageous Effect)

According to the present disclosure, a resin composition with good adhesion to rubber members, good oil resistance, and excellent durability can be provided.

Furthermore, according to the present disclosure, a hose which has good adhesion to the innermost layer and the inner tube rubber and good oil resistance, in which degradation caused by refrigerants or oils is suppressed, resulting in excellent durability, can be provided.

### BRIEF DESCRIPTION OF THE DRAWINGS

In the accompanying drawings:

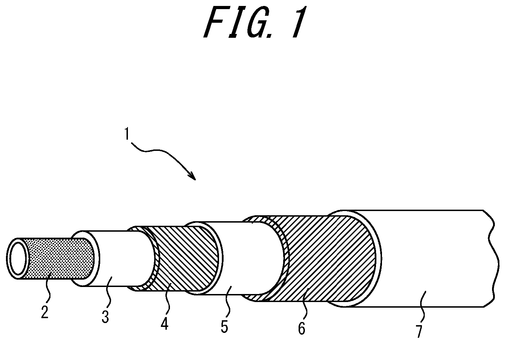

FIG. 1 is a perspective view schematically illustrating one embodiment of a hose of the present disclosure.

### DETAILED DESCRIPTION

An embodiments of the present disclosure will be described below. These descriptions are provided for the purpose of exemplifying the present disclosure and do not limit the present disclosure in any way. Additionally, in the present disclosure, two or more embodiments can be combined arbitrarily.

### <Resin Composition>

A resin composition of the present disclosure contains a polyamide, an olefin-based elastomer, and a compound having a piperidine structure,

Hereinafter, each component constituting the resin composition of the present disclosure will be described.

### (Polyamide)

The resin composition of the present disclosure contains a polyamide.

By including the polyamide as the main component, it is possible to enhance the barrier properties against gases and refrigerants.

The polyamide is a polyamide resin primarily includes an amino acid, a lactam, or a diamine and a dicarboxylic acid as the main constituent components. Specific examples of these constituent components include lactams such as ε-caprolactam, enantholactam, and ω-laurolactam; amino acids such as ε-aminocaproic acid, 11-aminoundecanoic acid, and 12-aminododecanoic acid; diamines such as tetramethylenediamine, hexamethylenediamine, undecamethylenediamine, dodecamethylenediamine, 2,2,4-/2,4,4-trimethylhexamethylenediamine, 5-methylnonamethylenediamine, m-xylylenediamine, p-xylylenediamine, 1,3-bis(aminomethyl)cyclohexane, 1,4-bis(aminomethyl)cyclohexane, bis(p-aminocyclohexyl)methane, bis(p-aminocyclohexyl)propane, and isophoronediamine; and dicarboxylic acids such as adipic acid, suberic acid, azelaic acid, sebacic acid, dodecanedioic acid, 1,4-cyclohexanedicarboxylic acid, 1,3-cyclohexanedicarboxylic acid, terephthalic acid, isophthalic acid, naphthalenedicarboxylic acid, and dimer acid. These constituent components may be used individually or in a mixture of two or more for polymerization, and the resulting polyamide resin may be either a homopolymer or a copolymer.

Preferred polyamide resins include, for example, polycapramide (nylon 6), polyhexamethylene adipamide (nylon 66), polytetramethylene adipamide (nylon 46), polyhexamethylene sebacamide (nylon 610), polyundecanamide (nylon 11), polydodecanamide (nylon 12), polyhexamethylene adipamide/hexamethylene terephthalamide copolymer (nylon 66/6T), and polycapramide/polyhexamethylene adipamide copolymer (nylon 6/66). These polyamide resins may be used alone or in a mixture of two or more.

There are no particular limitations on the degree of polymerization of the polyamide, and any polyamide having a relative viscosity at 25°C in a sulfuric acid solution with a concentration of 1 wt% (hereinafter sometimes simply referred to as "relative viscosity") in the range of 1.5 to 5.0 may be arbitrarily used.

Additionally, the polyamide may have the terminal group concentration thereof adjusted by adding one or more monocarboxylic acid compounds and/or dicarboxylic acid compounds or monoamine compounds and/or diamine compounds to the polyamide at any stage.

It should be noted that the content of the polyamide in the resin composition of the present disclosure is not particularly limited and can be appropriately adjusted according to the required performance. For example, from the perspective of enhancing the barrier properties of the resin composition, it is preferable that the polyamide accounts for 50 mass% or more, more preferably 55 mass% or more of the entire resin composition.

### (Olefin-based Elastomer)

The resin composition of the present disclosure further includes an olefin-based elastomer in addition to the polyamide. By including an olefin-based elastomer, not only barrier properties but also flexibility and impact resistance can be imparted.

Here, examples of the olefin-based elastomer include ethylene-butene copolymer, EPR (ethylene-propylene copolymers), modified ethylene-butene copolymers, EEA (ethylene-ethyl acrylate copolymers), modified EEA, modified EPR, modified EPDM (ethylene-propylene-diene terpolymer), ionomer, α-olefin copolymers, modified IR (isoprene rubber), modified SEBS (styrene-ethylene-butylene-styrene copolymers), halogenated isobutylene-para-methylstyrene copolymers, ethylene-acrylic acid modified polymer, ethylene-vinyl acetate copolymers, acid-modified forms of these, and mixtures mainly composed of these, for example. They may be used alone or in combination of two or more.

Among the above-described olefin-based elastomers, the olefin-based elastomer is preferably selected from the group consisting of ethylene-butene copolymers, EEA, EPR, and EPDM, and a derivative thereof. This is because flexibility and impact resistance can be further improved without causing a reduction in barrier properties and other performances.

In particular, olefin-based elastomers modified with acid anhydrides such as maleic anhydride, alkyl esters of acrylic acid such as glycidyl methacrylate, epoxy, and modified forms thereof are preferred as the olefin-based elastomer, because they enable the formation of a fine alloy structure with the polyamide resin as the base polymer.

The content of the olefin-based elastomer in the resin composition of the present disclosure is not particularly limited. However, if the amount is too low, the effects of improving the flexibility and impact resistance provided by the olefin-based elastomer cannot be sufficiently obtained, and if the amount is too high, the gas barrier properties are reduced. Therefore, the content is preferably 10 mass% or more, and more preferably 20 mass% or more.

Furthermore, the content ratio of the polyamide and the olefin-based elastomer (the polyamide / the olefin-based elastomer) in the resin composition of the present disclosure is preferably 80/20 to 40/60, more preferably 75/25 to 50/50, and particularly preferably 70/30 to 55/45 in a mass ratio. By setting the ratio of the polyamide / the olefin-based elastomer within the above range, the barrier properties, flexibility, and impact resistance can be well balanced at a higher level. If the content ratio of the polyamide is too low, the barrier properties are reduced, and if the content ratio of the olefin-based elastomer becomes too low, there is a risk that flexibility and impact resistance will decrease. Therefore, the above range is determined.

In cases where a modified elastomer such as an acid-modified elastomer is used as the olefin-based elastomer, an effect in that low specific energy and high kneading technology are not required during kneading (dispersion) is achieved. However, if the blending amount is too high, gelation of the resin occurs, leading to appearance defects such as surface roughness (fish eyes) during extrusion. Therefore, when a modified elastomer is used as the olefin-based elastomer, the content of the modified elastomer in the polyamide resin composition is preferably 40 mass% or less, for example, 5 to 40 mass%. Particularly, in the present disclosure, a composition in which 40 to 100 mass% of the olefin-based elastomer is an acid-modified elastomer can be preferably used.

Moreover, in order to ensure compatibility between the polyamide and the olefin-based elastomer, in other words, to achieve a good dispersion state, it is preferable that at least part of the elastomer is modified with maleic anhydride or the like. To obtain a good dispersion morphology, the average acid value (acid modification rate) of the entire elastomer used is preferably 0.8 mg CH₃ONa/g or more.

Furthermore, the dispersion morphology is improved as the acid value of the elastomer is increased. However, as the acid value increases, the viscosity of the obtained polyamide resin composition increases, impairing moldability. Therefore, in order to reduce the increase in viscosity caused by the increase in acid value, the acid value of the elastomer is preferably as low as possible within the range where a good dispersion state can be obtained, and the overall average acid value of the elastomers used is preferably 7.5 mg CH₃ONa/g or less.

Furthermore, even in the case of the same average acid value, when the acid value of the modified elastomer contained in the elastomers used is high, gel-like foreign substances, which are presumed to result from local overreaction during extrusion, may still occur by mixing such a modified elastomer with an unmodified elastomer even if the average acid value is lowered. Therefore, the acid value of the modified elastomer used is preferably 15.0 mg CH₃ONa/g or less.

In this way, although the inclusion of the olefin-based elastomer into the resin composition improves flexibility, impact resistance, and the like, a decrease in gas barrier properties is unavoidable. However, by adopting a fine alloy structure between the polyamide and the elastomer, particularly by dispersing the island phase of the elastomer in the sea phase of the polyamide, and further dispersing the polyamide resin in a scattered manner in the island phase of the elastomer, the decrease in gas barrier properties due to the inclusion of the elastomer can be suppressed, which is preferable.

### (Compound having Piperidine Structure)

Furthermore, the resin composition of the present disclosure includes a compound having a piperidine structure, in addition to the above-described polyamide and olefin-based elastomer.

Here, the compound having a piperidine structure has a repeating unit containing a piperidine structure and has a molecular weight of 1000 to 5000.

Such a compound having a piperidine structure can neutralize acids. Therefore, the resin composition of the present disclosure suppresses hydrolysis and can achieve excellent durability and oil resistance. Additionally, since the compound having a piperidine structure exhibits high dispersibility in the resin composition and does not generate water as a byproduct when neutralizing acids, it provides excellent durability compared to cases where inorganic acid scavengers are used and also prevents a decrease in adhesion to rubber components.

The reason why the molecular weight of the compound having a piperidine structure is defined to be 1000 to 5000 is that by setting the molecular weight to 1000 or more, even if a part of the molecule of the compound having a piperidine structure is cleaved, the above-mentioned effects of suppressing hydrolysis and improving durability can be maintained. Additionally, by setting the molecular weight to 5000 or less, a decline in the processability of the resin composition can be prevented. From a similar perspective, the molecular weight of the compound having a piperidine structure is preferably 1500 to 4000, more preferably 2000 to 3500.

In addition, the piperidine structure refers to a structure in which one of the carbon atoms in the six methylene groups of cyclohexane is replaced with nitrogen and one hydrogen is removed, and the piperidine structure may have various substituents.

The compound having a piperidine structure has a repeating unit containing the piperidine structure, and when used together with the above-described polyamide and olefin-based elastomer, it can impart excellent durability and oil resistance.

Here, the compound having a piperidine structure preferably contains four or more methyl groups in the piperidine structure. This is to suppress gelation caused by the reaction with the carboxylic acid at the polyamide terminal.

Examples of piperidines having four or more methyl groups include, for example, 2,2,6,6-tetramethylpiperidine, 1,2,2,6,6-pentamethylpiperidine, and the following compounds.

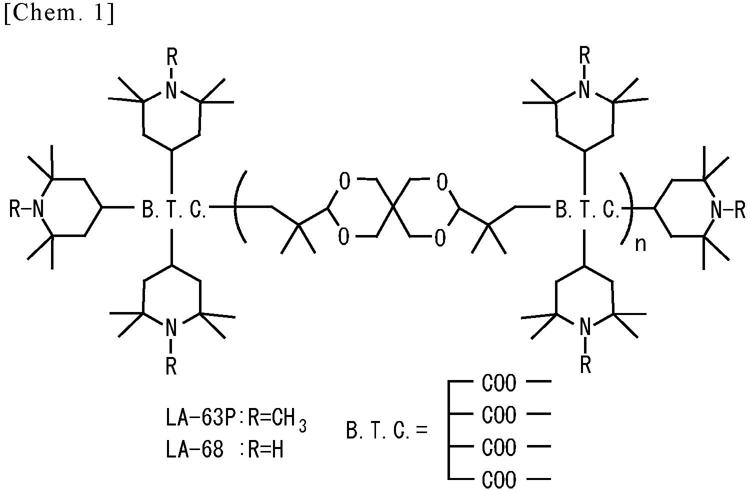

Additionally, the compound having a piperidine structure preferable further contains a triazine structure in the repeating unit. This is because even better durability and oil resistance can be achieved.

Examples of compounds that contain both a piperidine structure and a triazine structure in the repeating unit include, for example, the following compounds.

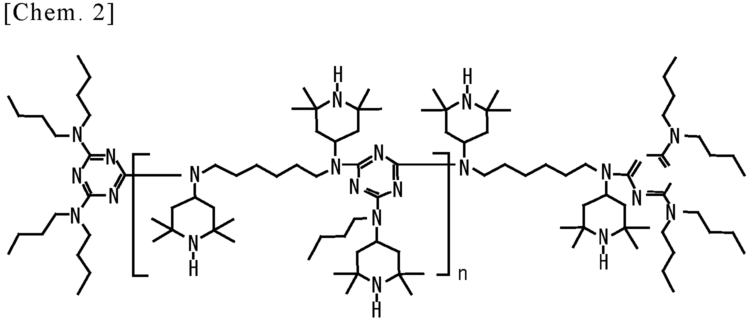

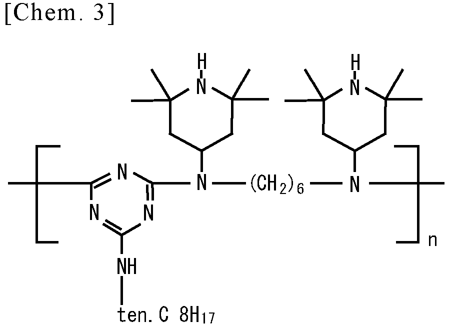

In the resin composition of the present disclosure, the content of the compound having a piperidine structure is 0.1 to 6 parts by mass per 100 parts by mass of the total content of the polyamide and the olefin-based elastomer. When the content of the compound having a piperidine structure is 0.1 parts by mass or more per 100 parts by mass of the total content of the polyamide and the olefin-based elastomer, a sufficient durability improvement effect can be obtained. When the content is 6 parts by mass or less per 100 parts by mass of the total content of the polyamide and the olefin-based elastomer, a decrease in adhesion to rubber components can be suppressed.

From a similar perspective, the content of the compound having a piperidine structure is preferably 0.3 to 5 parts by mass, more preferably 0.4 to 4.5 parts by mass, and even more preferably 0.5 to 4 parts by mass per 100 parts by mass of the total content of the polyamide and the olefin-based elastomer.

### (Other Components)

The resin composition of the present disclosure may further contain, as needed, additives (other components) such as lubricants, antistatic agents, age resistors, antioxidants, colorants, nucleating agents, fillers, reinforcing materials, heat-resistant agents, and light-resistant agents.

### <Hose>

Next, a hose of the present disclosure will be described.

The hose of the present disclosure contains the resin composition of the present disclosure described above.

By providing a member composed of the resin composition of the present disclosure, good adhesion to rubber components and good oil resistance are achieved and hydrolysis can be suppressed, resulting in improved durability.

The hose of the present disclosure is a refrigerant transport hose, and the resin composition of the present disclosure described above is preferably used as the innermost layer of the hose.

This is because good adhesion of the inner tube rubber and the innermost layer and good oil resistance can be maintained and deterioration caused by refrigerants and oils can be suppressed, resulting in excellent durability.

Here, FIG. 1 is a schematic perspective view illustrating one embodiment of the refrigerant transport hose of the present disclosure. The innermost layer 2 of this refrigerant transport hose 1 is composed of the resin composition of the present disclosure described above, and an inner rubber layer 3 is formed around the outer circumference thereof. A first reinforcing yarn layer 4, an intermediate rubber layer 5, a second reinforcing yarn layer 6, and an outer coat rubber layer 7 are formed in this order. The inner diameter of the hose 1 is not particularly limited, but it is generally about 6 to 20 mm, particularly about 8 to 19 mm.

The innermost layer 2 is made of the resin composition of the present disclosure. The composition of the resin composition of the present disclosure is as described above. The thickness of such an innermost layer 2 is preferably high from the perspective of gas barrier properties, but increasing the thickness reduces the flexibility of the hose. Therefore, the thickness of the innermost layer 2 can be set to about 50 to 500 µm, particularly about 100 to 450 µm.

It should be noted that the refrigerant transport hose of the present disclosure may further include an inner rubber layer (not illustrated) formed inside the innermost layer 2.

As the rubber forming the inner rubber layer 3 and the outer coat rubber layer 7, generally used rubbers include butyl rubber (IIR), chlorinated butyl rubber (Cl-IIR), chlorinated polyethylene, chlorosulfonated polyethylene, brominated butyl rubber (Br-IIR), isobutylene-bromo-paramethylstyrene copolymer, EPR (ethylene-propylene copolymer), EPDM (ethylene-propylene-diene terpolymer), NBR (nitrile-butadiene rubber), CR (chloroprene rubber), hydrogenated NBR, acrylic rubber, ethylene acrylic rubber (AEM), blends of two or more of these rubbers, or blends with polymers of which main component is one of these rubbers are used, with a butyl-based rubber or EPDM-based rubber being preferably used. Commonly used fillers, processing aids, age resistors, vulcanizing agents, vulcanization accelerators, and other compounding ingredients may be blended into these rubbers.

It should be noted that the rubber of the inner rubber layer 3 and the rubber of the outer coat rubber layer 7 may be of the same type or different types.

Furthermore, the rubber of the intermediate rubber layer 5 is not particularly limited as long as it has good adhesion to the inner rubber layer 2 and the outer coat rubber layer 7.

Additionally, an adhesive may be interposed between the inner rubber layer 3 and the innermost layer 2.

The thickness of the inner rubber layer 3 is preferably about 0.5 to 4 mm from the perspective of flexibility. The thickness of the intermediate rubber layer 5 is preferably about 0.1 to 0.6 mm, and the thickness of the outer coat rubber layer 7 is preferably about 0.5 to 2 mm.

The first reinforcing yarn layer 4 is formed by spirally winding reinforcing yarns, and the second reinforcing yarn layer 6 is formed by spirally winding reinforcing yarns in the opposite direction to the reinforcing yarns of the first reinforcing yarn layer 4.

The material of these reinforcing yarns is not particularly limited as long as commonly used materials are employed. In general, polyester, wholly aromatic polyester, nylon, vinylon, rayon, aramid, polyarylate, polyethylene naphthalate, and mixed-twist yarns of these materials are used.

The refrigerant transport hose of the present disclosure can be manufactured according to conventional methods. For example, the materials for the gas barrier layer 2 and the inner rubber layer 3 are extruded and laminated to predetermined thicknesses on a mandrel, the reinforcing yarn layer 4 is wound, the intermediate rubber layer 5 is extruded and laminated, the reinforcing yarn layer 6 is wound, then the outer coat rubber layer 7 is extruded and laminated, and thereafter, vulcanization is carried out at 140 to 170°C for 30 to 120 minutes to manufacture the hose.

The compounds described in this specification may be partially or entirely derived from fossil resources, may be derived from biological resources such as plant resources, or may be derived from recycled resources. Furthermore, they may be derived from a mixture of any two or more of fossil resources, biological resources, and recycled resources.

### EXAMPLES

The following examples are provided to further explain the present disclosure; however, these examples are for illustrating the present disclosure and do not in any way limit the present disclosure. In the examples, unless otherwise specified, the amounts are expressed in parts by mass.

### (Samples 1 to 13)

In accordance with the formulation summarized in Table 1, each sample of the resin composition was prepared by kneading at 240°C, which is above the melting point of polyamide resin, using a twin-screw kneader manufactured by Toyo Seiki Seisaku-sho, Ltd.

It should be noted that the content of each component in Table 1 is expressed in parts by mass per the total content (100 parts by mass) of the polyamide and the olefin-based elastomer.

### (Evaluations)

The following evaluations were conducted on each sample of the obtained resin composition. The evaluation results are summarized in Table 1.

### (1) Initial Elongation at Break (Eb)

After a test piece was prepared from each sample of the resin composition, the sample was elongated at a rate of 200 mm/min using a tensile testing machine manufactured by Shimadzu Corporation to measure the elongation at break (%).

The measured results of the elongation at break (Eb) are summarized in Table 1. The initial elongation at break is evaluated as better when the value is higher.

### (2) Elongation at Break Retention Rate After Refrigerant and Oil Test (ΔEb)

After a test piece was prepared from each sample of the resin composition, a refrigerant and oil test was performed under the following conditions.

Subsequently, the sample was elongated at a rate of 200 mm/min using a tensile testing machine manufactured by Shimadzu Corporation to measure the elongation at break (%). After the measurement, the ratio of the obtained value relative to the initial elongation at break (Eb) was calculated (elongation at break after the refrigerant and oil test / initial elongation at break × 100%) and this ratio was taken as the elongation at break retention rate after the refrigerant and oil test (ΔEb).

The calculation results of the elongation at break retention rate after the refrigerant and oil test (ΔEb) are summarized in Table 1. The results indicate excellent durability and oil resistance.

### (Refrigerant and Oil Test)

A tensile test piece with a thickness of 0.35 mm was placed in a pressure-resistant vessel, and 47 g of polyalkyleneglycol, of which the moisture content was adjusted to 2000 ppm, was added. Then, the pressure-resistant vessel was frozen for 1 hour, and the pressure-resistant vessel was depressurized for 3 minutes. Next, 47 g of R-134a was added as the refrigerant, and the vessel was left at 150°C for 1 week.

**[Table 1]**

| | | 1 | 2 | 3 | 4 | 5 | 6 | 7 | 8 | 9 | 10 | 11 | 12 | 13 |
|---|---|---|---|---|---|---|---|---|---|---|---|---|---|---|
| | | Examp les | | | | | | | | | | Comparative Examples | | |
| Chemical compositions | Polyamide *1 | 64 | 64 | 64 | 64 | 64 | 60 | 60 | 60 | 60 | 60 | 64 | 64 | 64 |
| | Olefin-based elastomer *2 | 36 | 36 | 36 | 36 | 36 | 40 | 38 | 36 | 40 | 40 | 36 | 36 | 36 |
| | Olefin-based elastomer *3 | - | - | - | - | - | - | 2 | 4 | - | - | - | - | - |
| | Age resister *4 | 1.2 | 1.2 | 1.2 | 1.2 | 1.2 | 1.2 | 1.2 | 1.2 | 1.2 | 1.2 | 1.2 | 1.2 | 1.2 |
| | Compound A having piperidine structure *5 | 0.5 | 0.75 | 1.5 | - | - | 0.5 | 0.5 | 0.5 | 0.5 | 0.5 | - | - | - |
| | Compound B having piperidine structure *6 | - | - | - | 0.5 | 1.5 | - | - | - | - | - | - | - | - |
| | Acid scavenger A *7 | - | - | - | - | - | - | - | - | - | - | - | - | 5 |
| | Acid scavenger B *8 | - | - | - | - | - | - | - | - | - | - | - | 0.5 | - |
| | Flowability improving agent A *9 | - | - | - | - | - | - | - | - | 3 | - | - | - | - |
| | Flowability improving agent B *10 | - | - | - | - | - | - | - | - | - | 0.5 | - | - | - |
| | Dispersant *11 | - | - | - | - | - | - | - | - | 0.3 | - | - | - | - |
| Evaluations | Initial Eb (%) | 431 | 433 | 396 | 419 | 404 | 398 | 406 | 425 | 468 | 422 | 413 | 339 | 366 |
| | Eb retention ratio after oil resistance test (%) | 85 | 90 | 89 | 83 | 90 | 94 | 77 | 85 | 83 | 78 | 54 | 28 | 35 |

| | | | | | | | | | | | | | | |
|---|---|---|---|---|---|---|---|---|---|---|---|---|---|---|
| *1: The total amount of Nylon 6 including at least "UBE Nylon 1011FB" *2: "Tafmer MH7010" manufactured by Mitsui Chemicals, Inc. *3: "Tafmer A-1050S" manufactured by Mitsui Chemicals, Inc. *4: The total amount of age resistors including "Adekstab AO-80", "Adekstab CDA-10", and "SUMILIZER TP-D" *5: "Chimassorb 2020 FDL" manufactured by BASF Japan Ltd. *6: "Chimassorb 944 FDL" manufactured by BASF Japan Ltd. *7: Reactive polystyrene containing oxazoline groups, "Epocross RPS" manufactured by Nippon Shokubai Co., Ltd. *8: Carbodilite, "HMV-5CA-LC" manufactured by Nisshinbo Chemical Inc. *9: "OGSOL MF-11" manufactured by Osaka Gas Chemical Co., Ltd. *10: "Light Amide WH-510K" manufactured by KYOEISHA CHEMICAL Co., LTD. *11: "Bal-7220" manufactured by Marubishi Oil Chemical Corporation | | | | | | | | | | | | | | |

From the results in Table 1, it can be understood that the samples in the examples exhibited superior elongation at break retention rate after the refrigerant and oil tests compared to the samples in the comparative examples.

### INDUSTRIAL APPLICABILITY

According to the present disclosure, a resin composition with good adhesion to rubber members, good oil resistance, and excellent durability can be provided.

Furthermore, according to the present disclosure, a hose which has good adhesion to the innermost layer and the inner tube rubber and good oil resistance, in which degradation caused by refrigerants or oils is suppressed, resulting in excellent durability, can be provided.

### [Contribution to Sustainable Development Goals (SDGs) led by the United Nations]

The SDGs have been proposed towards the realization of a sustainable society. One embodiment of the present disclosure can be considered to be a technology that contributes to goals such as "Goal 7: Affordable and Clean Energy", "Goal 12: Responsible Consumption and Production", and "Goal 7: Climate Action".

- 1: Refrigerant transport hose
- 2: Innermost layer
- 3: Inner rubber layer
- 4, 6: Reinforcing yarn layer
- 5: Intermediate rubber layer
- 7: Outer coat rubber layer

## Claims

1. A resin composition comprising a polyamide, an olefin-based elastomer, and a compound having a piperidine structure,
the compound having the piperidine structure having a repeating unit containing the piperidine structure and a molecular weight of 1000 to 5000, and
a content of the compound having the piperidine structure being 0.1 to 6 parts by mass per 100 parts by mass of a total content of the polyamide and the olefin-based elastomer.

2. The resin composition according to claim 1, wherein a content ratio of the polyamide to the olefin-based elastomer (the polyamide / the olefin-based elastomer) is 80/20 to 40/60.

3. The resin composition according to claim 1 or 2, wherein the olefin-based elastomer is at least one selected from the group consisting of ethylene-butene copolymers, EEA, EPR, and EPDM, and a derivative thereof.

4. The resin composition according to claim 1 or 2, wherein the compound having the piperidine structure has four or more methyl groups in the piperidine structure.

5. The resin composition according to claim 1 or 2, wherein the compound having the piperidine structure contains at least 2,2,6,6-tetramethylpiperidine in the piperidine structure.

6. The resin composition according to claim 1 or 2, wherein the compound having the piperidine structure further contains a triazine structure in the repeating unit.

7. The resin composition according to claim 1 or 2, used for an innermost layer of a hose.

8. The resin composition according to claim 7, wherein the hose is a refrigerant transport hose.

9. A hose comprising the resin composition according to claim 1 or 2.
